Europäisches Patentamt

European Patent Office

Office européen des brevets

(19)

(11) Publication number: **0 479 592 B1**

(12) **EUROPEAN PATENT SPECIFICATION**

(45) Date of publication of patent specification: **28.06.95**  (51) Int. Cl.⁶: **C08J 7/00**, B29C 59/14, C08J 5/12, C08J 7/12

(21) Application number: **91309074.2**

(22) Date of filing: **03.10.91**

(54) Surface treatment of fluorochemical members and preparation of composite products therefrom.

(30) Priority: **05.10.90 JP 266392/90**
**12.04.91 JP 108471/91**
**12.04.91 JP 108472/91**

(43) Date of publication of application:
**08.04.92 Bulletin  92/15**

(45) Publication of the grant of the patent:
**28.06.95 Bulletin  95/26**

(84) Designated Contracting States:
**DE GB**

(56) References cited:
**EP-A- 0 057 374**
**EP-A- 0 185 590**
**GB-A- 8 960 466**
**US-A- 4 465 547**

**WORLD PATENTS INDEX LATEST Derwent
Publications Ltd., London, GB; AN
88-238428(34) & JP-A-63170992**

(73) Proprietor: **Bridgestone Corporation
No. 10-1 Kyobashi 1-Chome
Chuo-Ku
Tokyo (JP)**

Proprietor: **Okazaki, Satiko
20-11 Takaidohigashi 2-chome,
Suginami-ku
Tokyo 168 (JP)**

Proprietor: **Kogoma, Masuhiro
843-15, Shimoniikura
Wako-shi,
Saitama-ken (JP)**

(72) Inventor: **Kusano, Yukihiro
No. 144, Kamiyasumatsu,
Tokorozawa-shi
Saitama-ken (JP)**
Inventor: **Yoshikawa, Masato
No. 5-9-202, Ogawa Higashi-cho, 3-chome
Kodaira-shi,
Tokyo (JP)**
Inventor: **Tanuma, Itsuo
3405-181, Kashiwahara,
Sayama-shi
Saitama-ken (JP)**
Inventor: **Fukuura, Yukio
No. 199-8, Kitairiso,
Sayama-shi
Saitama-ken (JP)**

EP 0 479 592 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

Inventor: **Naito, Kazuo**
**No. 969-1, Maginu,**
**Miyamae-ku**
**Kawasaki-shi,**
**Kanagawa-ken (JP)**
Inventor: **Morimura, Yasuhiro**
**No. 1-1, Ogawa Higashi-cho 3-chome**
**Kodaira-shi,**
**Tokyo (JP)**
Inventor: **Okazaki, Satiko**
**No. 20-11, Takaido Higashi 2-chome**
**Suginami-ku,**
**Tokyo (JP)**
Inventor: **Kogoma, Masahiro**
**No. 843-15, Shimoniikura,**
**Wakou-shi**
**Saitama-ken (JP)**


(74) Representative: **Stoner, Gerard Patrick et al**
**MEWBURN ELLIS**
**York House**
**23 Kingsway**
**London WC2B 6HP (GB)**

**Description**

This invention relates to a method for surface treating fluorochemical members with atmospheric glow plasma to render the surface hydrophilic and a method for joining fluorochemical members to other members to form composite products.

Fluorochemical members of fluoroplastic resins and analogues are of great interest for their mechanical properties and resistance against heat, weather, and chemicals. Since fluoroplastic resins are very expensive, they are often used as thin film sheets which are joined to supports of less expensive material which are responsible for air tightness and strength. Typical of such composite products are weather-resistant sheets.

Fluorochemical members of fluoroplastic resins and analogues, however, are difficult to form composite products because they have poor adhesion due to their characteristic chemical stability. Efforts have heretofore been made for rendering the surface of fluorochemical members hydrophilic for improving their adhesiveness. Prior art approaches include mechanical roughening, chemical etching, sputtering, flame treatment, and plasma or corona discharge treatment on the surface of fluoroplastic resin sheets. None of these approaches have gained sufficient bond strength.

Among the conventional approaches, the plasma surface treatment is an attractive surface treatment method for fluorochemical members since it is clean and offers a high degree of freedom for surface modification. Usually, fluorochemical members such as fluororesin sheets are modified by plasma discharge treatment to provide a hydrophilic surface suitable for adhesion. This treatment is often carried out in a gas atmosphere containing oxygen, argon or nitrogen or a gas mixture of oxygen and carbon tetrafluoride. The conventional plasma discharge treatment under such atmospheres, however, could not render the fluorochemical member surface fully hydrophilic, thus failing to achieve satisfactory adhesion.

Another known method for obtaining hydrophilic fluorochemical member surfaces is a low-pressure glow discharge process using helium gas as disclosed in J. R. Hall, C. A. L. Westerdahl et al, J. Appl. Polym. Sci., 16, 1465 (1975). The method could render fluorochemical member surfaces hydrophilic, but not to an extent enough for adhesion, and the method remained practically unacceptable.

In addition, since low-pressure glow plasma is generally carried under low pressures of less than about 10 Torr, this method requires a vacuum apparatus of a high capacity for commercial application, entailing increases in investment and operating cost. If objects to be treated contain much moisture and volatile plasticizers, these components would vaporize and leave the object surface in a vacuum atmosphere, disturbing the plasma treatment from achieving the intended function. Moreover, the plasma treatment of this type tends to produce heat and is thus undesirable to apply to articles of low-melting materials.

A commercially acceptable mode of corona discharge treatment also improves adhesion, but to an unsatisfactory level.

Therefore, it would be desirable to provide a method for modifying a surface of a fluorochemical member optimum for adhesion by treating the surface with plasma discharge to be fully hydrophilic. Consequently, it would be desirable to provide a method for forming a composite product by joining a surface-modified fluorochemical member to another member.

As opposed to the prior art belief that the atmosphere gases commonly used in plasma discharge treatment for imparting hydrophilic nature are applicable to the treatment of fluorochemical members for imparting hydrophilic nature to their surfaces, we have found that by using a helium gas atmosphere and an atmospheric pressure glow plasma process, fluorochemical members which are otherwise substantially unbondable can be rendered on the surface hydrophilic enough to provide a firm bond to other members. Then fluorochemical members having their surface modified to be bondable can be joined to other members of rubber compositions, resins, metals, ceramics, or semiconductors to achieve a firm bond therebetween. For joining purposes, silane and aminosilane coupling agents are adequate adhesives.

It is often desired to join such a surface-modified fluorochemical member to a rubber composition. For rubber compositions based on NBR (acrylonitrile-butadiene rubber), it is preferred to use urethane, NBR phenol, Modified NBR phenol, aminosilane and butyl adhesives because an enhanced bonding force is obtained. For rubber compositions based on IIR (isobutylene-isoprene rubber), it is preferred to use butyl adhesives because an enhanced bonding force is obtained.

One class of commonly used fluorochemical members is fluoropolymer-containing sheets including sheets of fluoropolymers and sheets of fluoropolymer and other synthetic resin blends. When metal layers (such as metal foil) or layers of synthetic resins other than fluoropolymers are formed thereon with or without intervening adhesive, there are obtained weather-resistant composite sheets in which a firm bond is achieved between the fluoropolymer-containing sheets and the metal or synthetic resin layer so that the respective components can exert their own nature to the full extent. Since the atmospheric glow plasma process does not need a complicated apparatus, the entire procedure is cost effective for manufacturing weather-resistant composite sheets using fluoropolymer-containing sheets.

Therefore, a first aspect of the present invention is a method for surface treating a fluorochemical member comprising the step of treating a surface of the fluorochemical member with atmospheric pressure glow plasma in a helium gas atmosphere. A second aspect of the present invention is a method for forming a composite product from a fluorochemical member by joining another member selected from the group consisting of rubber compositions, resins, metals, ceramics, and semiconductors to the surface-treated fluorochemical member.

In one preferred embodiment, the other member is joined to the fluorochemical member with an adhesive in the form of a silane coupling agent and/or aminosilane coupling agent. Where the other member is of a rubber composition based on a NBR rubber, it is joined to the surface-treated fluoro-chemical member with a urethane, NBR phenol, modified NBR phenol, aminosilane or butyl adhesive. Where the other member is of a rubber composition based on a IIR rubber, it is joined to the surface-treated fluorochemical member with a butyl adhesive.

In a further aspect of the invention a fluoropolymer-containing sheet on a surface thereof is treated with atmospheric glow plasma in a helium gas atmosphere. A metal layer or a layer of synthetic resin other than the fluoropolymer is bonded to the plasma-treated surface of the fluoropolymer-containing sheet, optionally with an adhesive. The products of these processes are also an aspect of the invention.

FIG. 1 is a schematic view of an atmospheric glow plasma discharging apparatus.

FIG. 2 is a cross section of another exemplary apparatus usable in the practice of the present invention.

FIG. 3 is a cross section of a further exemplary apparatus usable in the practice of the present invention.

FIG. 4 is a cross section taken along lines IV-IV in FIG. 3.

FIG. 5 is a schematic view of a still further exemplary atmospheric glow plasma discharging apparatus.

## DETAILED DESCRIPTION

The fluorochemical members which can be surface treated according to the present invention are formed of fluorochemical materials, that is, materials containing a fluorine atom or atoms in a molecule. Typical are fluorocarbons or fluororesins, for example, polytetrafluoroethylene, perfluoroalkoxy fluororesins, tetrafluorinated ethylenehexafluorinated propylene copolymers, ethylene-tetrafluorinated ethylene copolymers, poly(chlorotrifluoroethylene), polyvinylidene fluoride, and polyvinyl fluoride resins as well as fluororubbers.

Also included are blends of fluororesins with other (fluorine-free) synthetic resins, for example, polyethylene(meth)acrylate copolymers, poly(meth)acrylates, polyvinyl chloride, polyethylene terephthalate, polybutylene terephthalate, polyamides, polyvinyl acetate, polyvinylidene chloride, polycarbonates, poly(4-methyl-1-pentene), poly(cis-1,2-butadiene), acrylonitrile-butadiene-styrene copolymers, and ethylene-propylene copolymers. The amounts of synthetic resins blended with fluororesins may be determined in accordance with the desired physical properties of the member, although 0 to 10,000 parts by weight of the synthetic resins may be blended to 100 parts by weight of fluororesins.

The fluorochemical members may have any desired shape, for example, plate, sheet, cylinder, column, fiber, and block shapes.

The surface treating method of the invention is to treat a surface of the fluorochemical member with atmospheric glow plasma in a helium gas atmosphere.

In general, "glow discharge" (uniform discharge applicable to surface treatment) is defined as occurring under reduced pressure while all the discharges which can be created under atmospheric pressure are nonuniform discharges at high temperatures, such as arc discharge, corona discharge and spark discharge. That is, the concept of a glow discharge under atmospheric pressure was not recognized. It was found that a glow discharge plasma under atmospheric pressure can be created in selected conditions as disclosed in JP-A-306569/1989, and JP-A-15171/1990. The atmospheric plasma process takes place at pressure near atmospheric pressure, does not need a vacuum apparatus of high capacity, is applicable to members having relatively high contents of water and volatile plasticizers, produces little heat during operation and is thus applicable to low-melting material members. It also allows for localized treatment so that only a selected area of a member may be treated. Except that the atmosphere should be helium gas, the treating conditions may be selected from well-known parameters as will be described later.

Atmospheric glow plasma may be produced by any desired method which can generate a glow discharge plasma under atmospheric pressure and thereby induce reaction on the object surface. Voltage application is generally classified into DC and AC modes, with the AC mode being advantageous for commercial purposes. Generally, voltage application in either mode requires a pair of electrode, one for high voltage and one for grounding.

The AC discharge is further classified in terms of frequency or wavelength into low frequency, high frequency, and microwave. In the case of low frequency discharge, the electrodes used in producing atmospheric glow plasma include electrodes of capacity and coil types. For an internal electrode mode, it is recommended to coat one or both of the electrodes with insulator since a stable atmospheric glow plasma is readily available. An external electrode mode may be employed if the treating chamber is formed of glass or similar insulator. The high frequency discharge may also employ an internal electrode mode as used for the low frequency discharge and an external electrode mode as well as coil type discharge. In the case of microwave discharge, a waveguide mode of discharge is useful.

In the case of DC discharge, for creating and stabilizing a DC glow discharge with electrons directly fed from the electrode, it is recommended not to coat the high voltage applying and grounding electrodes with insulator.

In the practice of the present invention, surface treatment may be carried out by placing an object to be treated, which is a fluorochemical member, in a treating chamber where a plasma discharge zone is formed by the above-mentioned technique while helium gas is supplied to the chamber.

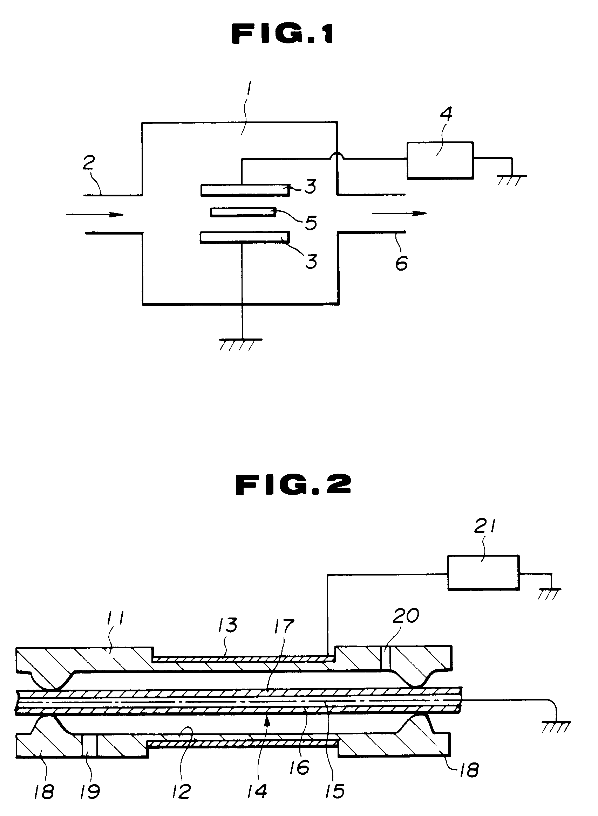

Referring to FIG. 1, there is illustrated one exemplary apparatus for carrying out surface treatment embodying the invention. The apparatus includes a treating chamber 1, a helium inlet tube 2 connected to the chamber, a pair of opposed electrodes 3, 3 spaced a predetermined distance in the chamber, one electrode being connected to a power supply 4 and the other electrode being grounded, and a gas outlet tube 6 connected to the chamber on a side opposite to the inlet tube. An object to be treated 5 is disposed between the electrodes 3, 3.

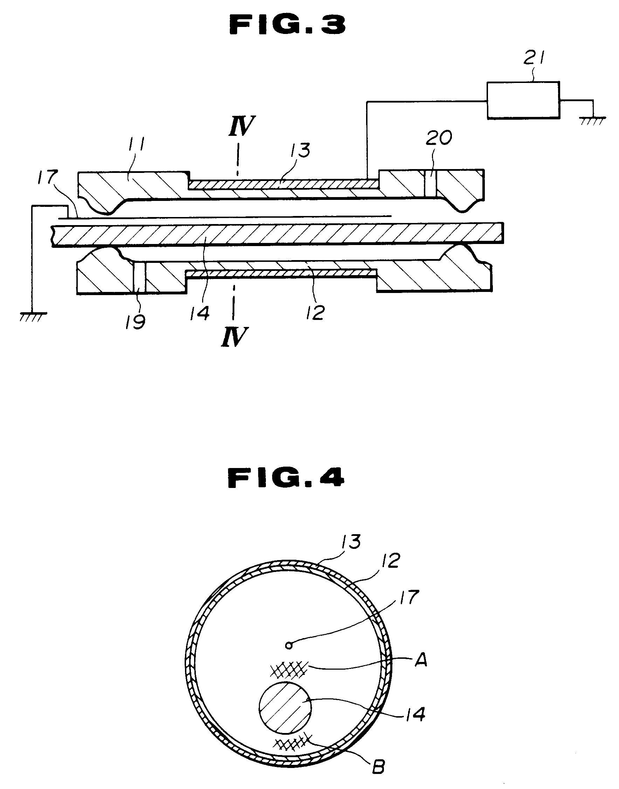

FIGS. 2 and 3 show different embodiments of the treating apparatus which may be used when the fluorochemical member has an axisymmetric shape such as tube, rod, and fiber shapes.

FIG. 2 shows an apparatus suitable for the treatment of a tubular object (fluorochemical member) which employs an annular electrode and a conductive core coated with a fluorochemical member as a counter electrode. The apparatus includes a cylindrical housing of insulating material 11 having a central thin walled section 12 and inwardly protruding annular supports 18 disposed at axially opposed ends of the housing. An annular electrode 13 is sleeved over the housing central section 12 so that the inner surface of the annular electrode 13 is insulated by the insulator 12. An article 14 in the form of a conductive core 15 covered over the outer periphery with a tubular member 16 to be treated (fluorochemical member) is substantially coaxially disposed in the housing 11. More particularly, the article 14 is supported by end annular supports 18. The housing 11 is provided with gas inlet and outlet ports 19 and 20 inside the annular supports 18. The annular electrode 13 is connected to an AC power supply 21. The core 15 serves as a counter electrode 17 which is grounded.

The apparatus of FIG. 2 is of simple structure in that the article to be treated 14 (that is, the conductive core 15 covered with the object to be treated 16) serves as a counter electrode. Between the annular electrode 13 and the counter electrode 17 is produced an atmospheric glow plasma region uniformly surrounding the article to be treated 14. Then the article 14 is uniformly treated on the outer surface.

FIG. 3 shows an apparatus suitable for the treatment of a rod-shaped object (fluorochemical member). The embodiment of FIG. 3 is substantially the same as FIG. 2 except that instead of the conductive core covered with an object to be treated serving as a counter electrode, a counter electrode in the form of a wire 17 is extended along an object to be treated 14. As seen from FIG. 4, the wire electrode 17 is spaced apart from the object 14. When an atmospheric glow plasma is produced, shadow zones A and B are formed by the object 14 itself between the electrodes 13 and 17 if the object 14 has a much larger diameter than the counter electrode 17. It was found that the glow plasma region extends throughout the shadow zones A and B. Therefore, the object 14 is subject to uniform glow plasma treatment over the outer surface.

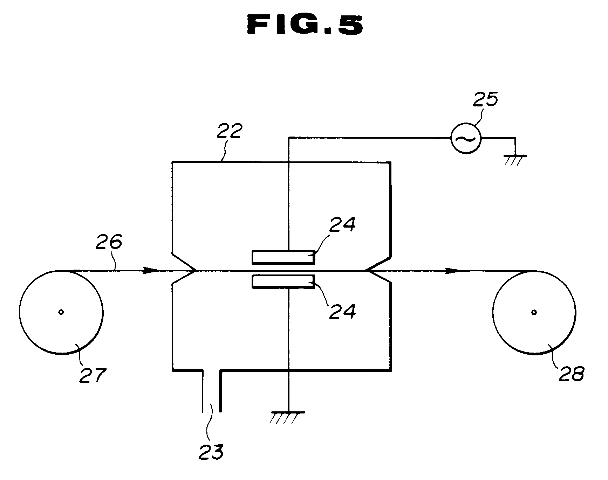

A still further possible embodiment of the apparatus used in the surface treatment in accordance with the invention is shown in FIG. 5. The embodiment of FIG. 5 is obtained by modifying the embodiment of FIG. 1 such that an object to be treated is continuously passed through the plasma region. The apparatus includes a treating chamber 22, a helium gas inlet tube 23 connected to the chamber, and a pair of insulator-coated electrodes 24, 24 spaced a predetermined distance in the chamber, one electrode being connected to a power supply 25 and the other electrode being grounded. A sheet to be treated 26 is continuously moved from a supply roll 27 to a take-up roll 28 while it is passed between the electrodes 24 and 24 where it is subject to surface treatment.

After surface treatment with atmospheric glow plasma in this way, the fluorochemical member has a highly hydrophilic surface which can be readily joined to another member for integration by well-known means such as heating, pressing, and heat pressing.

5

The other members to be joined to the fluorochemical members are of any desired materials including rubber compositions, resins, matals, ceramics, and semiconductors and may take any desired shape such as plate, sheet, cylinder, column, fiber and block shapes.

Adhesives are generally used for joinder purposes. A suitable adhesive may be selected from silane coupling agents, aminosilane coupling agents, epoxy adhesives, urethane adhesives, phenol adhesives, NBR phenol adhesives, acrylic adhesives, and rubber adhesives, depending on the type and surface state of the other material to be joined, the bonding method and other factors. Silane coupling agents and aminosilane coupling agents are preferred adhesives. For some materials or conditions, a direct joinder can be accomplished without adhesive.

When the fluorochemical members are joined to rubber compositions to form rubbery composite materials, any well-known rubber compositions may be used. Various well-known rubber bases may be used although acrylonitrile-butadiene rubber (NBR) and isobutylene-isoprene rubber (IIR) bases are preferred.

In joining rubber compositions to the surface-treated fluorochemical members, it is possible to form a direct bond therebetween without adhesive if a particular type of rubber composition or a particular set of bonding conditions is selected. In most cases, however, adhesives are used. A suitable adhesive may be selected from the above-mentioned adhesives, depending on the type and surface state of the rubber composition to be joined, the bonding method and other factors. When a rubber composition based on a NBR rubber is joined to the fluorochemical member, the adhesive is preferably selected form urethane, NBR phenol, modified NBR phenol, aminosilane and butyl adhesives, with the urethane and NBR phenol adhesives being most preferred. When a rubber composition based on a IIR rubber is joined to the fluorochemical member, a butyl adhesive is preferred.

Bonding may be achieved by conventional techniques, for example, by placing a rubber composition on a surface-treated fluorochemical member often through an adhesive layer, and applying pressure and/or heat or vulcanizing the rubber.

The fluorochemical member/rubber composite materials thus produced are useful in the manufacture of various parts such as automobile gasoline hoses and conveyor belts.

It is also possible to apply and bond layers of metal or synthetic resin other than fluoropolymers to the surface-treated fluorochemical members. The metal layers may be metal foils of at least 10 $\mu$m thick of aluminum, copper, iron, plated copper, stainless steel, brass or the like. The synthetic resin layers may be resin sheets of polyethylene terephthalate, polybutylene terephthalate, polyamides, poly(meth)acrylate, polyvinyl chloride, polycarbonates, polyethylene, polypropylene or the like. Most often, aluminum foil is used for its air-tightness, economy, ease of processing and other advantages. These foils and sheets play the role of imparting strength, air-tightness and other properties to the composite products instead of the fluorochemical members even when the fluorochemical members are as thin as 10 to 1000 $\mu$m. Since the surface of fluorochemical members has gained a high degree of hydrophilic nature through the plasma treatment, the fluorochemical members can be readily bonded to the foils or sheets into composite products by well-known bonding means, for example, heating, pressing, and heat pressing.

In joining metal or synthetic resin layers to the surface-treated fluorochemical members, it is possible to form a direct bond therebetween without adhesive if a particular type of material or a particular set of surface treating or bonding conditions is selected. In most cases, however, adhesives are used. A suitable adhesive may be selected from epoxy adhesives, urethane adhesives, phenol adhesives, NBR phenol adhesives, acrylic adhesives, and rubber adhesives, depending on the type and surface state of the layer to be joined, the bonding method and other factors.

In this way, a fluorochemical member having a surface treated with atmospheric glow plasma is joined to another sheet to form a weather-resistant composite sheet in which both the components are firmly bonded and integrated to each other.

EXAMPLE

Examples of the present invention are given below together with comparative examples by way of illustration and not by way of limitation.

Example 1 & Comparative Examples 1-4

Using the plasma treating apparatus of FIG. 1, strips of fluororesin film (ETFE: tetrafluoroethylene-ethylene copolymer) were treated on their surface under the conditions shown in Table 1. Comparative Examples 1 and 2 are prior art known methods for imparting hydrophilic nature to a surface of organic material. Comparative Example 3 is a prior art known method for imparting hydrophilic nature to a surface of fluorochemical material. Comparative Example 4 is a control sample on which no surface treatment was done.

The treated strips of Example 1 and Comparative Examples 1-4 were examined for degree of surface treatment by measuring a contact angle of a water droplet. Smaller contact angles with water mean that surface-treated members have higher degrees of hydrophilic nature. The measurements of contact angle are reported in Table 1.

Next, the treated fluororesin strips were adhesively joined to rubber pieces by heat pressing, for examining adhesiveness.

Two adhesives were used. Adhesive A is an aminosilane coupling agent diluted with methanol by a volume factor of 20. Adhesive B is a urethane adhesive, Desmodur R (manufactured by Bayer AG) diluted with methylene chloride by a volume factor of 3. The rubber pieces used had the following composition.

| Rubber composition A | Parts by weight |
|---|---|
| NBR (N230S by Japan Synthetic Rubber K.K.) | 100 |
| Carbon black | 30 |
| Zinc white | 2 |
| Antioxidant  1) | 1.5 |
| Vulcanization promoter  2) | 0.5 |
| Vegetable oil or mineral oil | 10 |

1)  polymerized $2,2,4-trimethyl-1,2-$ dihydroquinoline

2)  tetramethylthiuram disulfite

Fluororesin strips both before and after the above-mentioned surface treatment were coated with the adhesives by dipping and air drying. Then rubber pieces were laid on the strips and vulcanized to the strips by heat pressing at 150°C for 45 minutes.

The fluororesin/rubber composite samples were allowed to stand in a constant temperature chamber at 120°C for 24 hours for heat aging. The composite samples both before and after the heat aging test was subject to a stripping test by stripping the rubber pieces from the fluororesin strips. The percent area of rubber remainder on the fluororesin strip after the test was determined and reported as rubber adhesion. The proportion of cohesive failure of rubber was examined in this way.

The results are shown in Table 1.

## Table 1

| | | Example 1 | Comparative Example 1 | Comparative Example 2 | Comparative Example 3 | Comparative Example 4 |
|---|---|---|---|---|---|---|
| Type of discharge | | AGP | AGP | corona | LPGP | — |
| Pressure, Torr | | 760 | 760 | 760 | 0.3 | — |
| Frequency, kHz | | 3 | 3 | 15 | $1.356 \times 10^4$ | — |
| Treating time, sec. | | 60 | 60 | 60 | 60 | — |
| Gas | | He | $He/O_2$ (20/1) | air | He | — |
| Contact angle, ° | | 38.8 | 61.6 | 80.2 | 50.0 | 99.2 |
| Adhesive A | Rubber adhesion, % Before heat aging | 30 | 5 | 5 | 20 | 0 |
| Adhesive A | Rubber adhesion, % After heat aging | 60 | 5 | 10 | 40 | 0 |
| Adhesive B | Rubber adhesion, % Before heat aging | 100 | 15 | 0 | 50 | 0 |
| Adhesive B | Rubber adhesion, % After heat aging | 100 | 5 | 0 | 60 | 0 |

AGP: atmospheric glow plasma

LPGP: low pressure glow plasma

Table 1 shows that as compared with the fluororesin strips treated by the prior art techniques, the surface of the fluororesin strip treated in the embodiment of the present invention has a small contact angle with water, that is, improved water wettability, which indicates that a high degree of hydrophilic nature has been imparted and that the surface has been well modified for bonding.

The data of percent rubber adhesion indicate that the rubber is firmly bonded to the fluororesin strip treated in the embodiment of the present invention as compared with the fluororesin strips treated by the prior art techniques, demonstrating that the present technique is effective for integration.

<u>Example 2</u>

This example examines the compatibility of rubber compositions with adhesives. The rubber compositions tested are rubber composition A in Example 1 based on NBR and the following rubber composition B based on IIR.

| Rubber composition B | Parts by weight |
|---|---|
| IIR (Butyl 268 by Japan Synthetic Rubber K.K.) | 100 |
| Carbon black (N − 660) | 70 |
| Zinc white | 5 |
| Stearic acid | 1 |
| Paraffin oil | 25 |
| Vulcanization promoter 3) | 0.5 |
| Vulcanization promoter 4) | 1 |
| Sulfur | 2 |

3) dibenzothiazyl disulfide (MBTS)

4) tetramethylthiuram disulfide (TMTD)

Fluorochemical members of the same ETFE resin as in Example 1 were used and surface treated in the same manner as in Example 1.

The adhesives used were
NBR phenol adhesive (Metalock 968 manufactured by Toyo Chemical Research K.K.),
modified NBR phenol adhesive,
butyral adhesive,
aminosilane adhesive (methanol dilution by a factor of 50),
butyl adhesive (MEK dilution by a factor of 4), and
urethane adhesive (Desmodur R manufactured by Bayer AG, ethylene chloride dilution by a factor of 3). The adhesives were brush coated to the treated surface of fluororesin strips and air dried. Then rubber pieces were laid on the strips and vulcanized to the strips by heat pressing at 150°C for 45 minutes for rubber composition A and at 150°C for 30 minutes for rubber composition B.

The fluororesin/rubber composite samples were subject to a stripping test by stripping the rubber pieces from the fluororesin strips in the same manner as in Example 1. The percent area of rubber remainder on the fluororesin strip after the test was determined and reported as rubber adhesion. The proportion of cohesive failure of rubber was examined in this way.

The results are shown in Table 2.

## Table 2

| Adhesive | Rubber adhesion, % | |
|---|---|---|
| | Rubber A | Rubber B |
| NBR phenol | 100 | 0 |
| Modified NBR phenol | 50 | 0 |
| Butyral | 0 | 0 |
| Aminosilane | 50 | 0 |
| Butyl | 70 | 100 |
| Urethane | 100 | 0 |

As is evident from Table 2, for the fluororesin surfaces modified to be highly hydrophilic, the NBR phenol, modified NBR phenol, aminosilane, butyl and urethane adhesives are well compatible with the NBR rubber composition, with the NBR phenol and urethane adhesives being most preferred. The butyl adhesive is well compatible with the IIR rubber composition.

Example 3

Using an internal electrode type atmospheric glow plasma discharging apparatus as shown in FIG. 5, various fluoropolymer-containing sheets reported in Table 4 were surface treated under the conditions reported in Table 3. The sheets both before and after the surface treatment were measured for contact angle with water for comparing their hydrophilic nature before and after the surface treatment.

The results are shown in Table 5.

## Table 3.

| Inert gas | Helium |
|---|---|
| Gas flow rate | 5.0 ℓ /min. |
| Discharge frequency | 5 kHz |
| Treating time | 60 sec. |

Table 4

| No. | Fluoropolymer | Abbre-viation |
|---|---|---|
| 1 | tetrafluoroethylene — perfluoroalkylvinylether resin | PFA |
| 2 | perfluoroethylene — propylene resin | FEP |
| 3 | polychlorotrifluoroethylene resin | CTFE |
| 4 | tetrafluoroethylene — ethylene resin | ETFE |
| 5 | polyvinylidene fluoride resin | PVDF |
| 6 | polyvinyl fluoride resin | PVF |
| 7 | polyvinylidene fluoride resin/polymethyl methacrylate resin blend | PVDF/PMMA |
| 8 | polyvinylidene fluoride resin/polyvinyl chloride resin blend | PVDF/PVC |

Manufacturers:

1, 2, 3, 4: Daikin Industry K.K.

5: Pennwalt Co. (now Atochem Co.)

6: E.I. duPont (38 $\mu$m thick)

20  7: Denka K.K. (DX41 film, 40 $\mu$m thick)

11

Table 5

| No. | Abbreviation | Contact angle with water, ° | |
| --- | --- | --- | --- |
| | | Before treatment | After treatment |
| 1 | PFA | 109.8 | 27.0 |
| 2 | FEP | 111.8 | 28.0 |
| 3 | CTFE | 94.1 | 28.0 |
| 4 | ETFE | 98.8 | 30.6 |
| 5 | PVDF | 92.1 | 32.0 |
| 6 | PVF | 83.5 | 30.4 |
| 7 | PVDF/PMMA | 63.7 | 27.2 |
| 8 | PVDF/PVC | 61.0 | 19.1 |

As is evident from Table 5, atmospheric glow plasma treatment in helium gas can impart a high degree of hydrophilic nature to the surface of fluoropolymer sheets. Differently stated, fluoropolymer sheets can be modified to have a surface readily bondable with metal foils or synthetic resin sheets.

Example 4

Strips of PVDF, ETFE, FEP and PFA were subjected to atmospheric glow plasma treatment as in Example 3 under the same conditions as in Table 3. The strips were bonded to aluminum foil pieces of 0.2 mm thick with a urethane adhesive (NS50/CA25 manufactured by Sanyo Chemicals K.K.). The adhesive was cured by keeping the samples in an oven at 100°C for 15 minutes. Bonding force against stripping was measured. Similarly, control samples (without plasma treatment) were examined for bonding force.

The results are shown in Table 6.

Table 6

| Fluororesin | Bonding force, kgf/cm | |
| --- | --- | --- |
| | No treatment | Atmospheric glow plasma |
| ETFE | 0.00 | 0.43 |
| PVDF | 0.10 | 0.83 |
| FEP | 0.00 | 0.64 |
| PFA | 0.00 | 0.60 |

As is evident from Table 6, atmospheric glow plasma treatment significantly improves the bond between fluororesin sheet and aluminum foil.

There has been described a method for surface treating fluorochemical members whereby the fluorochemical members which are otherwise difficultly bondable can be modified to possess a highly hydrophilic, readily bondable surface. Then fluorochemical members having surface treated can be integrated with other members of metal, rubber or the like through a firm bond, preferably with the aid of adhesive. To fluorochemical members possessing a highly hydrophilic, readily bondable surface as a result of surface modification, layers of metal or synthetic resin can be laminated and firmly bonded to form weather-resistant composite sheets.

Although some preferred embodiments have been described, many modifications and variations may be made thereto in the light of the above teachings. It is therefore to be understood that within the scope of the appended claims, the invention may be practised otherwise than as specifically described. For example, although actual atmospheric pressure or a pressure substantially equal thereto is usual for the plasma treatment because of convenience, the pressure used may in some cases be appreciably different from actual atmospheric pressure provided that it is of the same order of magnitude, e.g. ± 20%. The advantages stated can still be obtained.

## Claims

1. A method for surface treating a fluorochemical article comprising the step of treating a surface of the fluorochemical member with atmospheric glow plasma in a helium gas atmosphere.

2. A method for forming a composite product from a fluorochemical member comprising the steps of:
   treating a surface of the fluorochemical member with atmospheric glow plasma in a helium gas atmosphere, and
   joining another member selected from the group consisting of rubber compositions, resins, metals, ceramics, and semiconductors to the surface treated fluorochemical member.

3. The method of claim 2 wherein the other member is joined to the fluorochemical member with an adhesive selected from the group consisting of silane coupling agents, aminosilane coupling agents and mixtures thereof.

4. The method of claim 2 wherein the other member of a rubber composition based on a NBR rubber is joined to the fluorochemical member with an adhesive selected from the group consisting of urethane, NBR phenol, modified NBR phenol, aminosilane and butyl adhesives.

5. The method of claim 2 wherein the other member of a rubber composition based on a IIR rubber is joined to the fluorochemical member with a butyl adhesive.

6. A method for forming a composite sheet comprising the steps of:
   treating a surface of a fluorochemical sheet with atmospheric glow plasma in a helium gas atmosphere, and
   bonding a layer of metal or synthetic resin to the surface treated fluorochemical sheet.

7. A surface-treated fluorochemical article having a hydrophilicised surface, obtainable in accordance with claim 1.

8. A composite product obtainable in accordance with any one of claims 2 to 6.

9. A method of forming a composite article, comprising bonding a rubber, resin, metal, ceramic or semiconductor component to a surface of a fluorochemical component which has been rendered more hydrophilic by atmospheric glow plasma treatment in helium gas.

10. A method according to any one of claims 1 to 6, article according to claim 7 or composite product according to claim 8 in which the fluorochemical is a fluororubber, polytetrafluoroethylene, perfluoroalkoxyfluororesin, tetrafluorinated ethylene hexafluorinated propylene copolymer, ethylene-tetrafluorinated ethylene copolymers, poly(chlorotrifluoroethylene), polyvinylidene fluoride, polyvinyl fluoride resin or a blend of one of the above fluoro resins with a fluorine-free synthetic resin.

# EP 0 479 592 B1

**Patentansprüche**

1. Verfahren zur Oberflächenbehandlung eines Gegenstands auf Fluorchemikal-Basis, umfassend den Schritt der Behandlung einer Oberfläche des Gegenstands auf Fluorchemikal-Basis mit Umgebungsdruck-Glimmentladungsplasma in einer Heliumgas-Atmosphäre.

2. Verfahren zur Herstellung eines Verbundmaterials aus einem Gegenstand auf Fluorchemikal-Basis, umfassend die Schritte:
   Behandeln einer Oberfläche des Gegenstands auf Fluorchemikal-Basis mit Umgebungsdruck-Glimmentladungsplasma in einer Heliumgas-Atmosphäre, und
   Verbinden des oberflächenbehandelten Gegenstands mit einem anderen Gegenstand, ausgewählt aus der aus Gummizusammensetzungen, Harzen, Metallen, Keramiken und Halbleitern bestehenden Gruppe.

3. Verfahren nach Anspruch 2, worin der andere Gegenstand mit dem Gegenstand auf Fluorchemikal-Basis mit einem Klebstoff verbunden wird, der aus der aus Silan-Kupplern, Aminosilan-Kupplern und Gemischen davon bestehenden Gruppe ausgewählt wird.

4. Verfahren nach Anspruch 2, worin der andere Gegenstand aus einer auf einem NBR-Gummi basierenden Gummmizusammensetzung mit dem Gegenstand auf Fluorchemikal-Basis mit einem Klebstoff verbunden wird, der aus der aus Urethan-, NBR-Phenol-, modifizierten NBR-Phenol-, Aminosilan- und Butyl-Klebstoffen bestehenden Gruppe ausgewählt wird.

5. Verfahren nach Anspruch 2, worin der andere Gegenstand aus einer auf einem IIR-Gummi basierenden Gummmizusammensetzung mit dem Gegenstand auf Fluorchemikal-Basis mit einem Butyl-Klebstoff verbunden wird.

6. Verfahren zur Herstellung einer Verbundplatte, umfassend die Schritte:
   Behandeln einer Oberfläche einer Platte auf Fluorchemikal-Basis mit Umgebungsdruck-Glimmentladungsplasma in einer Heliumgas-Atmosphäre, und
   Aufkleben einer Schicht aus Metall oder Kunstharz auf die oberflächenbehandelte Platte auf Fluorchemikal-Basis.

7. Oberflächenbehandelter Fluorchemikal-Gegenstand mit einer hydrophilierten Oberfläche, der nach Anspruch 1 erhalten werden kann.

8. Verbundmaterial, das nach irgendeinem der Ansprüche 2 - 6 erhalten werden kann.

9. Verfahren zur Herstellung eines Verbundgegenstands, umfassend das Aufkleben einer Gummi-, Harz-, Metall-, Keramik- oder Halbleiter-Komponente auf eine Oberfläche einer Komponente auf Fluorchemikal-Basis, die durch Behandlung mit Umgebungsdruck-Glimmentladungsplasma in Heliumgas hydrophiler gemacht wurde.

10. Verfahren nach irgendeinem der Ansprüche 1 - 6, Gegenstand nach Anspruch 7 oder Verbundmaterial nach Anspruch 8, worin das Fluorchemikal ein Fluorkautschuk, Polytetrafluorethylen, Perfluoralkoxyflu-or-Harz, Tetrafluorethylen-Hexafluorpropylen-Copolymer, Ethylen-Tetrafluorethylen-Copolymere, Poly-(chlortrifluorethylen), Polyvinylidenfluorid, Polyvinylfluorid-Harz oder eine Mischung eines der obigen Fluorharze mit einem fluorfreien Kunstharz ist.

**Revendications**

1. Méthode de traitement de surface d'article fluorochimique comprenant l'étape de traiter une surface d'un membre fluorochimique avec un plasma à incandescence atmosphérique dans une atmosphère de gaz hélium.

2. Méthode pour former un produit composite à partir d'un membre fluorochimique comprenant les étapes de :

14

EP 0 479 592 B1

- traiter une surface d'un membre fluorochimique avec un plasma à incandescence atmosphérique dans une atmosphère de gaz hélium, et
- joindre un autre membre choisi dans le groupe consistant des compositions de caoutchouc, des résines, des métaux, des céramiques, et des semi-conducteurs au membre fluorochimique traité en surface.

3. Méthode suivant la revendication 2 dans laquelle l'autre membre est joint au membre fluorochimique avec un adhésif choisi dans le groupe consistant des agents de couplage silane, des agents de couplage aminosilane et des mélanges de ceux-ci.

4. Méthode selon la revendication 2 dans laquelle l'autre membre d'une composition de caoutchouc à base de caoutchouc NBR est joint au membre fluorochimique avec un adhésif choisi dans le groupe consistant des adhésifs urhéthane, phénol NBR, phénol NBR modifié, aminosilane et butyle.

5. Méthode selon la revendication 2 dans laquelle l'autre membre d'une composition de caoutchouc à base de caoutchouc IIR est joint au membre fluorochimique avec un adhésif butyle.

6. Méthode pour former une feuille composite comprenant les étapes de :
- traiter une surface d'une feuille fluorochimique avec un plasma à incandescence atmosphérique dans une atmosphère de gaz hélium, et
- lier une couche de métal de résine synthétique à la feuille fluorochimique traitée en surface.

7. Article fluorochimique traité en surface ayant une surface rendue hydrophile, que l'on peut obtenir selon la revendication 1.

8. produit composite que l'on peut obtenir selon l'une des revendications 2 à 6.

9. Méthode de formation d'un article composite, comprenant la liaison d'un composant caoutchouc, résine, métal, céramique ou semi-conducteur à une surface d'un composant fluorochimique qui a été rendu plus hydrophile par un traitement par plama à incandescence atmosphérique dans un gaz hélium.

10. Méthode selon l'une des revendications 1 à 6, article selon la revendication 7 ou produit composite selon la revendication 8 où le fluorochimique est un fluorocaoutchouc, un polytétrafluoroéthylène, une résine perfluoroalcoxyfluoro, un copolymère propylène hexafluoré éthylène tétrafluoré, des copolymères éthylène tétrafluoré-éthylène, un poly(chlorotrifluoroéthylène), un fluorure de polyvinylidène, une résine fluorure de polyvinyle ou un mélange de l'une des résines fluoro ci-dessus avec une résine synthétique exempte de fluor.

15

# FIG.1

# FIG.2

# FIG.3

# FIG.4

# FIG.5